(19) **Europäisches Patentamt**

**European Patent Office**

**Office européen des brevets**

(11) Veröffentlichungsnummer : **0 377 090 B1**

## (12) EUROPÄISCHE PATENTSCHRIFT

(45) Veröffentlichungstag der Patentschrift :
**22.01.92 Patentblatt 92/04**

(21) Anmeldenummer : **89119476.3**

(22) Anmeldetag : **20.10.89**

(51) Int. Cl.⁵ : **A22C 15/00**

(54) **Vorrichtung zum Aufreihen von mit Halteschlaufen versehenen Gegenständen.**

(30) Priorität : **03.01.89 DE 8900035 U**

(43) Veröffentlichungstag der Anmeldung :
**11.07.90 Patentblatt 90/28**

(45) Bekanntmachung des Hinweises auf die
Patenterteilung :
**22.01.92 Patentblatt 92/04**

(84) Benannte Vertragsstaaten :
**AT BE CH DE ES FR LI NL**

(56) Entgegenhaltungen :
**EP-A- 0 189 763**
**EP-A- 0 330 857**
**DE-C- 3 300 012**
**DE-C- 3 437 830**

(73) Patentinhaber : **JKL ROHEMA**
**MASCHINENBAU GMBH**
**In der Schneithohl 19**
**W-6242 Kronberg 2 (DE)**

(72) Erfinder : **Jahns, Rolf**
**Am Sportplatz**
**W-6374 Steinbach (DE)**

(74) Vertreter : **Dickel, Klaus, Dipl.-Ing.**
**Julius-Kreis-Strasse 33**
**W-8000 München 60 (DE)**

Jouve, 18, rue Saint-Denis, 75001 PARIS

EP 0 377 090 B1

## Beschreibung

Die Erfindung betrifft eine Vorrichtung zum selbsttätigen Aufreihen von mit Halteschlaufen versehenen Gegenständen mit einer um eine Kettenführung umlaufenden Endloskette, wobei die Kettenführung um ihre Längsachse um mindestens 180° schwenkbar ist, und mit einer Halterung für eine Haltestange für die Gegenstände versehen ist, wobei die Haltestange über einen Ausziehschlitten in Längsrichtung von der Kettenführung abziehbar ist.

Eine derartige Vorrichtung ist aus der DE-PS 3437830 bekannt. Diese Vorrichtung hat sich im besonderen beim Aufreihen von Würsten nach ihrer Befüllung auf Rauchstäben bewährt, auf welchen die Würste in gleichmäßigen Abständen aufgehängt werden, zur weiteren Behandlung, wie etwa der Unterziehung eines Räuchervorganges.

Es haben sich allerdings eine Reihe gravierender Nachteile gezeigt, die im besonderen im Bereich der Rauchstäbe liegen. Bei der bekannten Vorrichtung ist im Endbereich des Rauchstabes eine Aussparung vorgesehen für den Eingriff eines Ausziehhakens. Diese Aussparung führt zu Schwierigkeiten beim Eingriff des Hakens und im besonderen beim Außereingriffbringen, da hierzu der relativ schwer beladene Rauchstock angehoben werden muß. Darüber hinaus gestaltet sich die Reinigung der Rauchstäbe schwierig, während außerdem sich am Rande der Aussparung Keime festsetzen können. Auch entstehen erhöhte Fertigungskosten durch den Stanzvorgang und die anschließend erforderliche Entgratung. Schließlich reichen die Querrillen nicht aus, um die Würste beim Vorschub bzw. Transport des Rauchstabes sicher an ihrem vorbestimmten Platz zu halten.

Angesichts der aufgezeigten Nachteile liegt der Erfindung die Aufgabe zugrunde, unter deren Behebung, die Vorrichtung der eingangs genannten Art so auszugestalten, daß sich eine vereinfachte Handhabung ergibt, der Rauchstock in einfacher Weise hygienisch gereinigt werden kann und bei kostengünstiger Fertigung eine sichere Halterung der Schlaufen in der vorbestimmten Position gewährleistet ist.

Gelöst wird diese Aufgabe gemäß der Erfindung dadurch, daß an dem Ausziehschlitten eine um eine horizontale Achse schwenkbar gehaltene Ausziehklinke vorgesehen ist, die mit einer Einprägung im Endbereich der Haltestange zum Eingriff bringbar ist. Die Einprägung innerhalb der Haltestange läßt sich bei ihrer Her stellung im Prägewerkzeug in einem Hub prägen, ohne daß eine Nachbehandlung, wie etwa ein Entgraten, erforderlich ist. Die schwenkbare Klinke, die am Ausziehschlitten gehalten ist, kommt mit der Einprägung zum Eingriff und führt die Haltestange sicher aus der Vorrichtung heraus.Der Rauchstock wird nach vorn, in einer horizontalen Bewegung, manuell herausgezogen, womit die Haltestange frei ist und ohne Anzuheben außer Eingriff mit dem Ausziehschlitten gebracht werden kann.

Vorteilhafterweise steht die Ausziehklinke unter der nach unten gerichteten Kraft einer Feder, die die Klinke gegen den Boden der Einprägung drückt und somit einen sicheren Eingriff gewährleistet.

Die Haltestange besitzt bevorzugt einen im wesentlichen C-förmigen Querschnitt und trägt entlang ihrer Rückkante in regelmäßigen Abständen angeordnete Quereinprägungen, deren Tiefe mindestens dem Durchmesser des Schlaufenmaterials entspricht. Die Quereinprägungen lassen sich ebenfalls bei der Herstellung der Haltestange im Prägewerkzeug in einem Hub prägen. Da sie mindestens die Tiefe des Schlaufenmaterials besitzen, ist ein Ausgleiten der Schlaufen beim Vorschub oder Transport der Haltestange nicht zu befürchten.

Vorteilhafterweise sind die Quereinprägungen in einem Abstand von etwa 8 mm voneinander angeordnet. Sie passen sich somit dem Aufreihsystem der Aufhängevorrichtung an, d.h., dem Gliedabstand der Rollenkette, dem Transporthub usw.

Gemäß einer bevorzugten Ausführungsform weist die Haltestange im Bereich iher Rückkante in Längsrichtung eine Materialverjüngung auf. Diese Materialverjüngung läßt sich beim Strangpressen des Profils vorsehen. Der Prägevorgang wird hierdurch wesentlich vereinfacht, ohne die Festigkeit und Stabilität der Haltestange negativ zu beeinflussen.

Endseitig trägt die Haltestange bevorzugt jeweils eine Abkantung,die ein Aufgleiten der Ausziehklinke vor ihrem Eingriff mit der Einprägung erleichtert. Gleichzeitig erübrigt sich ein Entgraten der Endkante auf beiden Seiten, wodurch sich die Herstellung der Haltestange kostengünstiger gestaltet.

Weitere Vorteile, Einzelheiten und erfindungswesentliche Merkmale ergeben sich aus der nachfolgenden Beschreibung einer bevorzugten Ausführungsform der Erfindung, unter Bezugnahme auf die beigefügten Zeichnungen, wobei das Ausführungsbeispiel lediglich stellvertretend anhand des Aufreihens von Würsten auf eine Rauchstange beschrieben wird, ohne daß dies eine Einschränkung auf diesen Anwendungsbereich bedeutet.

Dabei zeigen im einzelnen :

Fig. 1     die Draufsicht auf die Vorrichtung in schematischer Darstellung,
Fig. 2     eine schematische Darstellung des Endbereiches der Rauchstange vor dem Eingriff der Auszieh-

2

klinke, in Seitenansicht,

Fig. 3      eine der Fig. 2 entsprechende Darstellung nach dem Eingriff der Ausziehklinke,

Fig. 4      den Rauchstab im Querschnitt und

Fig. 5      das Rauchstabprofil im Querschnitt vor dem Prägevorgang in einem größeren Maßstab.

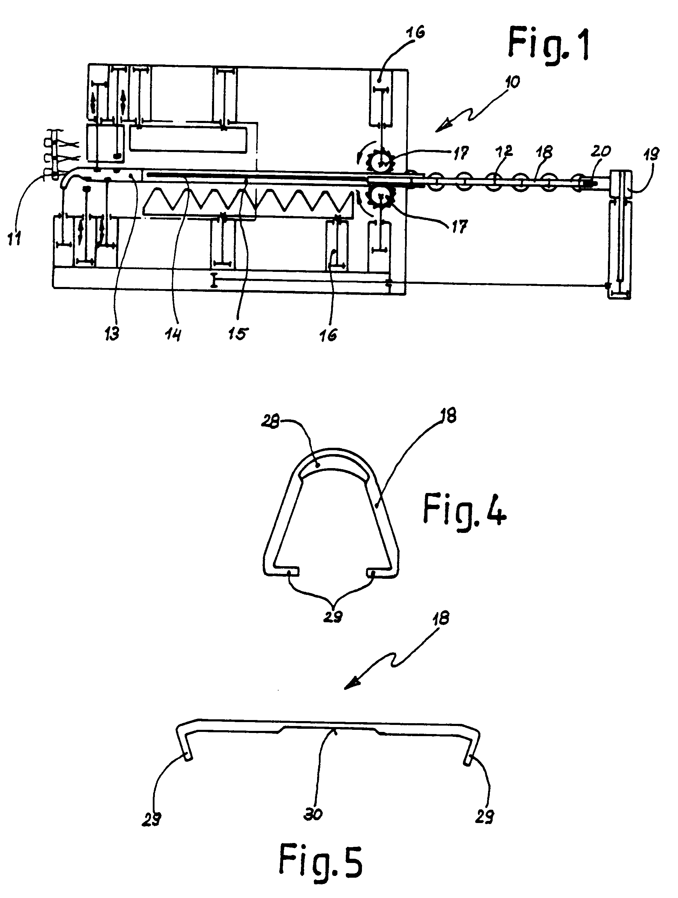

Aufbau und Wirkungsweise der Vorrichtung sollen zunächst kurz anhand der Fig. 1 erläutert werden. Der Vorrichtung, die in ihrer Gesamtheit mit der Bezugsziffer 10 versehen ist, werden die verschlossenen und endseitig mit einer Schlaufe 11 versehenen Würste 12 zugeführt, wobei die Schlaufen 11 über eine Fangvorrichtung von einem Schwert 13 aufgenommen werden. Von dort werden sie in einzelnen Arbeitstakten in regelmäßigen Abständen auf dem Obertrum einer umlaufenden Kette 14 abgesetzt.

Der Kettenführungsrahmen 15 ist um seine Längsachse über einen Winkel von mindestens 180° schwenkbar gehalten und wird seitlich durch über eine Zylinderanordnung 16 ausfahrbare Abstützeinrichtung 17 geführt. Der Kettenführungsrahmen 15 trägt eine in der Zeichnung nicht dargestellte Halterung, auf welche das untere Kettentrum umgreifend eine als Haltestange ausgebildete Rauchstange 18 durch die Schlaufen 11 der Würste 12 aufschiebbar ist. Nachdem eine dem Rauchstab entsprechende Länge Reihe von Würsten 12 auf dem Obertrum der Kette 14 abgesetzt ist, wird der Kettenführungsrahmen 15 um 180° gedreht, wobei die Schlaufen 11 von dem Rauchstab 18 übernommen werden, der, nunmehr das Obertrum der Kette umgreifend, von einem pneumatisch betätigten Schlitten 19 aus der Vorrichtung 10 herausziehbar ist, wobei, wie nachfolgend noch näher erläutert werden wird, eine Ausziehklinke 20 mit einer Einprägung 21 im Endbereich des Rauchstabes 18 zum Eingriff kommt. Nach Entnahme des nun oben liegenden Rauchstabes kann ein neuer Rauchstab 18 dann wieder, das Untertrum der Kette 14 umgreifend, in den Kettenführungsrahmen 15 eingeschoben werden.

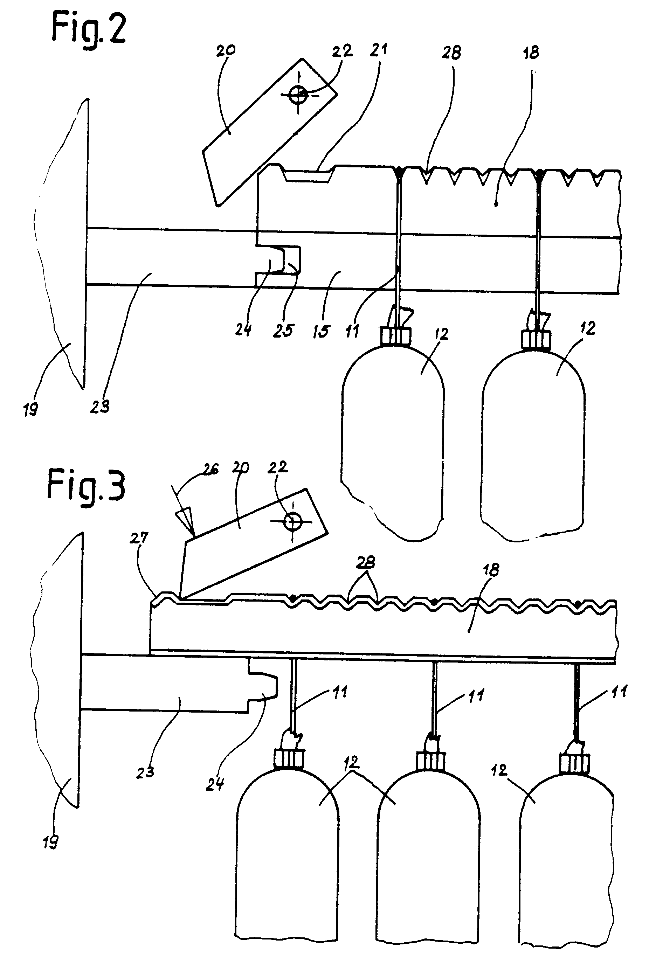

Entsprechend der schematischen Darstellung in Fig. 2 ist an dem Schlitten 19 eine um eine horizontale Achse 22 schwenkbare Ausziehklinke 20 gehalten. Zu Beginn des Ausziehvorganges greift zunächst ein am Schlitten 19 drehbar gehaltener Wellenstummel 23 mit einem an seinem Vorderende angeordneten Querriegel 24 in eine an der Vorderkante des Kettenführungsrades 15 angeordnete Aussparung 25 ein. Wie bereits oben erläutert, wird durch eine Drehung des Wellenstummels 23 der Kettenführungsrahmen 15 um 180° gedreht, wobei der Rauchstock 18 die Schlaufen 11 mit den hieran hängenden Würsten 12 übernimmt.

Wie die Fig. 3 zeigt, greift die Ausziehklinke 20 in die Einprägung 21 des Rauchstabes 18 ein, wobei der Eingriff über eine durch einen Pfeil 26 schematisch wiedergegebenen Feder unterstützt wird. Die Vorderkante (und wegen der doppelseitigen Verwendbarkeit auch die Rückseite) des Rauchstabes 18 trägt eine Abkantung 27, die das Aufgleiten der Ausziehklinke 20 erleichtert, während ein Abrieb weitgehendst verhindert wird.

Aus den Fig. 2 und 3 ergibt sich weiterhin, daß der Rauchstab 18 in relativ geringen regelmäßigen Abständen Quereinprägungen 28 trägt, die die Schlaufen 11 an ihren jeweiligen Absetzpositionen festhalten. Um eine Anpassung an das Aufreihsystem der Aufhängevorrichtung zu ermöglichen, sind die Quereinprägungen 28 in relativ engen regelmäßigen Abständen voneinander angeordnet, wobei,etwa in Abhängigkeit von dem Durchmesser der Würste 12 bzw. der Länge des Arbeitshubes, nur jede vierte, fünfte oder sechste Quereinprägungen 28 durch eine Schlaufe 11 besetzt wird. Die Quereinprägungen 28 besitzen etwa die Tiefe des Durchmessers des Schlaufenmaterials, um eine Längsverschiebung der Schlaufen während eines Arbeitstaktes oder des Transportes des beladenen Rauchstabes zu vermeiden.

Die Fig. 4 zeigt das Querschnittsprofil des Rauchstabes 18. Es ist im wesentlichen C-förmig ausgebildet, mit nach innen abgewinkelten Endlaschen 29. Die Endlaschen 29 hintergreifen eine im einzelnen nicht dargestellte Halterung am Kettenführungsrahmen 15.

Die Fig. 5 zeigt in einem größeren Maßstab das stranggepreßte Profil des Rauchstabes 18. Im mittleren Bereich, der der Rück- oder Oberseite des fertigen Rauchstabes 18 entspricht, ist eine Materialverjüngung in Längsrichtung vorgesehen. Diese Materialverjüngung 30 erleichtert den Prägevorgang sowohl hinsichtlich der Abkantung als auch der Einbringung der Einprägungen 21 und Quereinprägungen 28 und 27 für jeden Stab. Die Stärke der Endlaschen 29 ist ebenfalls reduziert. Die Fertigung des Rauchstabes läßt sich in einfacher Weise wie folgt ausführen : Zunächst wird das stranggepreßte Profil auf Länge zugeschnitten. Die Länge ist systembedingt und kann bei etwa 1000 mm liegen. Das Profil wird sodann im Prägewerkzeug in einem Hub geprägt, wobei sowohl die endseitigen Abkantungen 27, die Einprägungen 21 sowie die Quereinprägungen 28 ausgebildet werden. Der Rauchstab wird sodann auf F 25 ausgehärtet. Der auf diese Weise gefertigte Rauchstab besitzt eine glatte, leicht und hygienisch zu reinigende Oberfläche ohne irgendwelche Unterbrechungen.

Es soll an dieser Stelle noch einmal darauf hingewiesen werden, daß es sich bei der vorangehenden Beschreibung lediglich um eine solche beispielhaften Charakters handelt und daß verschiedene Modifikationen und Änderungen möglich sind, ohne dabei den Rahmen der Erfindung zu verlassen, wobei auch ein Einsatz der Vorrichtung etwa in anderen Fertigungsbereichen möglich ist.

**Patentansprüche**

1. Vorrichtung zum selbsttätigen Aufreihen von mit Halteschlaufen (11) versehenen Gegenständen mit einer um eine Kettenführung umlaufenden Endloskette (14), wobei die Kettenführung um ihre Längsachse um mindestens etwa 180° schwenkbar ist, und mit einer Halterung für eine Haltestange (18) für die Gegenstände versehen ist, wobei die Haltestange (18) über einen Ausziehschlitten (19) in Längsrichtung von der Kettenführung abziehbar ist, **dadurch gekennzeichnet,** daß an dem Ausziehschlitten (19) eine um eine horizontale Achse (22) schwenkbar gehaltene Ausziehklinke (20) vorgesehen ist, die mit einer Einprägung (21) im Endbereich der Haltestange (18) zum Eingriff bringbar ist.

2. Vorrichtung nach Anspruch 1, **dadurch gekennzeichnet,** daß die Ausziehklinke (20) unter dem Druck einer nach unten gerichteten Kraft einer Feder (26) steht.

3. Vorrichtung nach einem der Ansprüche 1 oder 2, **dadurch gekennzeichnet,** daß die Haltestange (18) einen im wesentlichen C-förmigen Querschnitt besitzt und entlang ihrer Rückkante in regelmäßigen Abständen angeordnete Quereinprägungen (28) trägt, deren Tiefe mindestens dem Durchmesser des Schlaufenmaterials entspricht.

4. Vorrichtung nach Anspruch 3, **dadurch gekennzeichnet,** daß die Quereinprägungen (28) in einem Abstand von etwa 8 mm voneinander angeordnet sind.

5. Vorrichtung nach einem der vorangehenden Ansprüche, **dadurch gekennzeichnet,** daß die Haltestange (18) endseitig jeweils eine Abkantung (27) trägt.

6. Vorrichtung nach einem der vorangehenden Ansprüche, **dadurch gekennzeichnet,** daß die Haltestange (18) im Bereich ihrer rückwärtigen Kante in Längsrichtung eine Materialverjüngung (30) aufweist.

7. Vorrichtung nach einem der vorangehenden Ansprüche, **dadurch gekennzeichnet,** daß der Ausziehschlitten (19) einen relativ hierzu drehbaren Wellenstummel (23) trägt, der an seinem freien Ende mit einem Querriegel (24) versehen ist, welcher mit einer endseitig am Kettenführungsrahmen (15) angeordneten Aussparung (25) zum Eingriff führbar ist.

**Claims**

1. Device for automaticly stringing up objects provided with hanging loops (11) comprising an endless chain (14) rotating about a chain guide, said chain guide being rotatably held about its longitudinal axis by at least about 180°, and furthermore comprising a holding device for a stay bar (18) for said objects, said stay bar (18) being withdrawable from said chain guide in longitudinal direction by a carriage (19), **characterized by,** said carriage (19) being provided with a catch (20) held pivotably about a horizontal axis which may be brought into engagement with an impression (21) at the end portion of the stay bar (18).

2. Device according to claim 1, characterized by said catch (20) being biased by the force of a spring (26) in downward direction.

3. Device according to eitherone of claims 1 or 2, characterized by said stay bar (18) having a substantially C-formed cross-section and being provided with cross impressions (28) the depth of which corresponds at least to the diameter of said loop material.

4. Device according to claim 3, characterized by, said cross impressions (28) being provided in a distance of 8 mm from each other.

5. Device according to anyone of the preceding claims, characterized by said stay bar (18) being provided with a bend-off (27) at each end.

6. Device according to anyone of the preceding claims, characterized by said stay bar (18) being provided at its rearward edge in longitudinal direction with a material diminution (30).

7. Device according to anyone of the preceding claims, characterized by said carriage (19) being provided with a shaft end (23) relatively rotatable with respect thereto said shaft end having a cross bar (24) at its free end which may be brought into engagement with a recess (25) provided at the end of the chain guide frame (15).

**Revendications**

1. Dispositif pour enfiler automatiquement des objets munis d'une bouche de suspension (11), ce procédé comprenant une chaîne infinie (14) tournant sur un guidage de chaîne, à l'occasion de quoi ce guidage de chaîne étant pivotable d'au moins 180° autour de son axe longitudinal et étant muni d'un système d'attache pour une barre de support (18) pour les objets, à l'occasion de quoi la barre de support (18) peut être enlevée du guidage de chaîne dans le sens longitudinal du chariot de transport (19), caractérisé en ce que, au chariot de transport (19) est prévue une lame (20) pivotant autour d'un axe horizontal (22) et que l'on peut fixer au bout de la barre de guidage (18) à l'aide d'une empreinte (21).

2. Dispositif selon la revendication 1, caractérisé en ce que la lame (20) est maintenue sous la pression d'un ressort (26) dont la force est dirigée vers le bas.

3. Dispositif selon l'une des revendications 1 ou 2, caractérisé en ce que la barre de support (18) possède essentiellement une coupe transversale en forme de C et port tout au long de son arête dorsale des empreintes transversales (28) dont la profondeur correspond au moins au diamètre du matériel des bouches de suspension.

4. Dispositif selon la revendication 3, caractérisé en ce que les empreintes transversales (28) sont disposées avec un intervalle de 8 mm l'une de l'autre.

5. Dispositif selon une des revendications précédentes, caractérisé en ce que le bord de la barre de support (18) se bourbe vers le bas aux deux extrémités (27).

6. Dispositif selon une des revendications précédentes, caractérisée en ce que la barre de support (18) présente à son arête arrière dans le sens transversal une diminution du matériel (30).

7. Dispositif selon une des revendications précédentes, caractérisé en ce que le chariot des transport (19) porte un tronçon (23) pivotable, muni d'une barre transversale (24) à son extrémité libre, cette barre ayant du côté de l'extrémité du bâti du guidage de chaîne (15) un retrait (25) permettant l'engrenage.

Fig.1

Fig.4

Fig.5

Fig.2

Fig.3